# EUROPEAN PATENT APPLICATION

(11) **EP 4 443 204 A1**
(43) Date of publication of application: **09.10.2024**
(21) Application number: 24168527.0
(22) Date of filing: 04.04.2024
(51) Int. Cl.: G02B 6/02, G02B 6/44

(54) **OPTICAL FIBER CABLE WITH A REDUCED DIAMETER**

(30) Priority: 05.04.2023 IN 202311025821
(71) Applicant: Sterlite Technologies Limited, Gurugram, Haryana 122102 (IN)
(72) Inventor: Mishra, Atul, 122102 Gurugram (IN); Singh, Sourabh, 122102 Gurugram (IN)
(74) Representative: Petraz, Gilberto Luigi

(57) **Abstract**

Disclosed is an optical fiber cable (100) comprising a central strength member (CSM) (104), a plurality of buffer tubes (106), and a sheath (114). In particular, the plurality of buffer tubes (106) are stranded around the CSM (104) such that each buffer tube encloses optical fibers (116) with one or more protective coating layers (306) having a combined thickness of less than 30 micrometer (µm). Moreover, the plurality of buffer tubes (106) are stranded in at-least two concentric layers around the CSM (104). Further, the sheath (114) surrounds the CSM (104) and the plurality of buffer tubes (106). The optical fiber cable (100) has a fill factor of greater than 7 fibers/millimeter square (f/mm²).

## Description

### TECHNICAL FIELD

Embodiments of the present disclosure relate to the field of optical telecommunication systems, and more particularly, relates to an optical fiber and optical fiber cable with a reduced diameter.

This application claims the benefit of Provisional Indian Application No. 202311025821 titled "OPTICAL FIBER CABLE WITH A REDUCED DIAMETER" filed by the applicant on 05th April 2023, which is incorporated herein by reference in its entirety.

### BACKGROUND ART

Optical fibers are widely used to transmit information or data in the form of light from one place to another. The optical fibers are disposed within the optical fiber cable. Fiber optic cables include one or more optical fibers or other optical waveguides that conduct optical signals, for example carrying voice, data, video, or other information

Increasing demand of high-speed optical fiber communication has subsequently increased the density of optical fiber networks, which has led to a larger problem of accommodation of the optical fiber cables. Attenuation of optical signals and micro-bending losses in the optical fibers have a huge impact on the range and quality of optical signals communicated in the network.

Low attenuation (e.g., a fiber having an attenuation value of ^0.17 dB/km) is an important characteristic of optical fibers configured to efficiently transmit data. Fiber nonlinearity is also a factor limiting the performance of optical fibers used in high speed, long haul transmission applications. In general, fiber nonlinearity can be reduced by increasing the effective area of the fiber. This is because power density is inversely proportional to the effective area. While some fiber designs configured for single mode operation have focused on increasing the effective area, the effective area achieved by these designs has been limited by micro- and macro-bending losses. As optical fiber cables have expanded in numbers of optical fibers and corresponding size, handling and disposal complexities have arisen, demanding a solution that optimizes space utilization without compromising performance.

Prior art reference CN212989723U discusses a multitube cable with buffer tubes.

Other prior art references WO2022251017A1 and EP3955041A1 delve into multitube cables with buffer tubes and their cable fill factors.

Existing optical fiber cable solutions, as discussed in patents like CN212989723U, WO2022251017A1, and EP3955041A1, face limitations in effectively reducing the size of multitube cables while maintaining or improving performance. The prior art does not adequately address the need for a compact design with enhanced data transmission capabilities.

In multicore optical fiber, an outer trench is known in the prior art which primarily focuses on improving inter core cross talk specifically in a case of reduced diameter multicore optical fiber and the glass diameter of the optical fiber is significantly low. The design parameters for multicore optical fibers include pitch, outer clad thickness (OCT), and refractive index (RI) structures of the core. The OCT represents the minimum distance between a center of the outer cores and the interface between the cladding and the coating. To compensate for the low OCT resulting from an increase in pitch (which is necessary to reduce crosstalk) and reduction in the glass diameter, the outer cladding layer is optimized. The overall design is optimized to achieve improved crosstalk performance and bend characteristics. In single mode fiber, leakage loss is one of the important optical parameters that need to be controlled. If the leakage loss of the optical fiber is more, then the optical fiber exhibits more attenuation.

However, there are a number of drawbacks of the conventional optical fiber cables in the above stated prior arts. As the demand for efficient space utilization is on the rise there is an urgent need to reduce the size of multitube cables while delivering performance. Thus, the present disclosure proposes a technical solution that overcomes the above-stated limitations in the prior arts by providing an optical fiber and optical fiber cable with a reduced diameter.

The optical communication industry has long felt the need for a multitube cable that combines a high density packaging with optimal performance. The unresolved issue is the absence of a compact design that effectively addresses the challenges posed by the increasing demand for data transmission within limited physical space.

### SUMMARY OF THE DISCLOSURE

Embodiments of the present disclosure relates to an optical fiber comprising a core having a first alpha value (α1) in a range of 4 to 8 and a cladding comprising first through third cladding layers and surrounding the core. In particular, the refractive index profile of the second cladding layer comprises at least one trench region such that a trench relative refractive index (Δ2) of the at least one trench region decreases gradually from an outer boundary of the first cladding layer to a trench center of the at least one trench region and increases gradually from the trench center to an outer boundary of the second cladding layer.

According to the first aspect of the present disclosure, the first cladding layer has a first clad diameter (D) and the core has a core diameter (d) and ratio of the first clad diameter (D) to the core diameter (d) is greater than 2.

According to the second aspect of the present disclosure, at least one trench region has a second alpha value (α2) in a range of 5 to 8.

According to the third aspect of the present disclosure, the optical fiber has a macro bend loss of less than or equal to
(i) 0.2 decibel/turn (dB/turn) at a bend radius of 2.5 millimeter (mm) and a wavelength of 1550 nanometer (nm), and
(ii) 0.5 dB/turn at a bend radius of 2.5 mm and a wavelength of 1625 nm.

According to the fourth aspect of the present disclosure, the optical fiber further has a macro bend loss of less than or equal to
(i) 0.15 dB/turn at a bend radius of 5 mm and a wavelength of 1550 nm, and
(ii) 0.45 dB/turn at a bend radius of 5 mm and a wavelength of 1625 nm

According to the fifth aspect of the present disclosure, the optical fiber comprising one or more coating layers surrounding the cladding. The absolute difference between a third refractive index (N3) of the third cladding layer and a coating refractive index (N4) of the coating layer is less than or equal to 0.01.

According to the sixth aspect of the present disclosure, the cladding is independent of traces of Chlorine (Cl). The concentration of traces of Chlorine (Cl) in the cladding is less than 1500 ppm.

According to the seventh aspect of the present disclosure, the minimum value of the trench relative refractive index (Δ2) of the second cladding layer is in a range of -0.35% to -0.45%.

According to the eighth aspect of the present disclosure, the second cladding layer has a trench radius (R2) in a range of 14 micrometer (µm) to 20 µm.

According to the ninth aspect of the present disclosure, the mode field diameter (MFD) of the optical fiber is in a range of 8.2 µm to 9 µm. The cladding has a cladding diameter of less than or equal to 125 ± 0.7 µm.

According to the tenth aspect of the present disclosure, the one or more coating layers has a coating diameter less than or equal to 250 µm.

According to the tenth aspect of the present disclosure, the optical fiber comprises a core and a cladding having at least one trench region such that a trench relative refractive index (Δ2) is minimum near center of the trench.The optical fiber is used in an optical fiber ribbon such that adjacent optical fibers are at least partially bonded.

The foregoing objectives of the present disclosure are attained by providing an optical fiber and an optical fiber cable with ultra-low bend loss.

"The invention addresses the challenge of accommodating the growing data transmission requirements within limited space.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a pictorial snapshot illustrating a cross-sectional view of an optical fiber cable in accordance with an embodiment of the present disclosure;
Fig. 2 is a pictorial snapshot illustrating a cross-sectional view of another optical fiber cable in accordance with an embodiment of the present disclosure;
Fig. 3 is is a pictorial snapshot illustrating a cross-sectional view of an optical fiber in accordance with an embodiment of the present disclosure;
Fig. 4 is a pictorial snapshot illustrating a cross-sectional view of another optical fiber in accordance with an embodiment of the present disclosure.

The optical fiber cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

### The following brief definition of terms shall apply throughout the present disclosure:

The term "optical fiber" as used herein refers to a light guide that provides high-speed data transmission. The optical fiber has one or more glass core regions and a glass cladding region. The light moving through the glass core regions of the optical fiber relies upon the principle of total internal reflection. The glass core regions have a higher refractive index (n1) than the refractive index (n2) of the glass cladding region of the optical fiber.

The term "optical fiber cable" as used herein refers to a cable that encloses a plurality of optical fibers.

The term "fill factor" as used herein refers to a ratio of (i) number of optical fibers to (ii) a cross-sectional area of the optical fiber cable with respect to an outer diameter of a sheath.

The term "zero-dispersion slope" as used herein context of the optical fiber refers to rate of change of dispersion at zero-dispersion wavelength.

The term "macro bending loss" as used herein refers to losses induced in bends around mandrels (or corners in installations), generally more at a cable level or for an optical fiber. The macro bend loss occurs when the fiber cable is subjected to a significant amount of bending above a critical value of curvature. The macro bend loss is also called large radius loss.

The term "SHORE D" as used herein refers to a hardness scale.

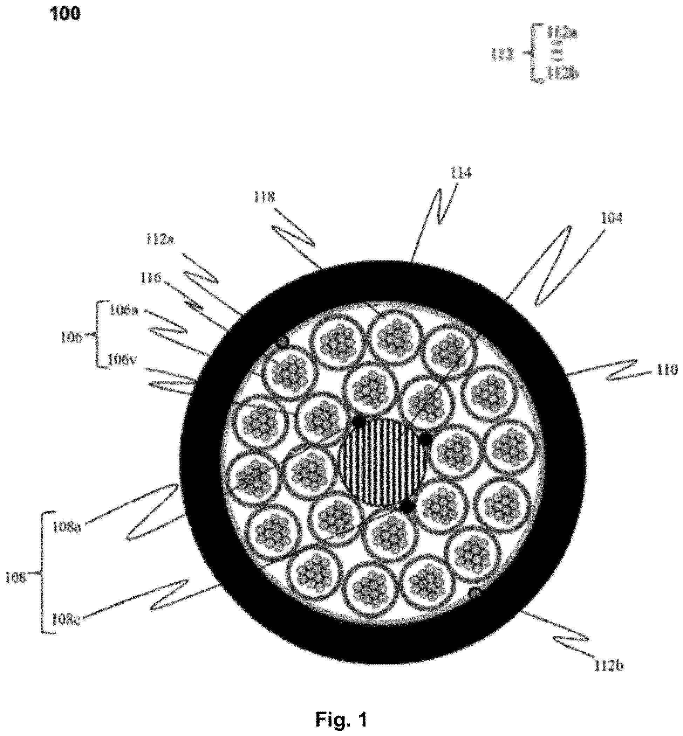

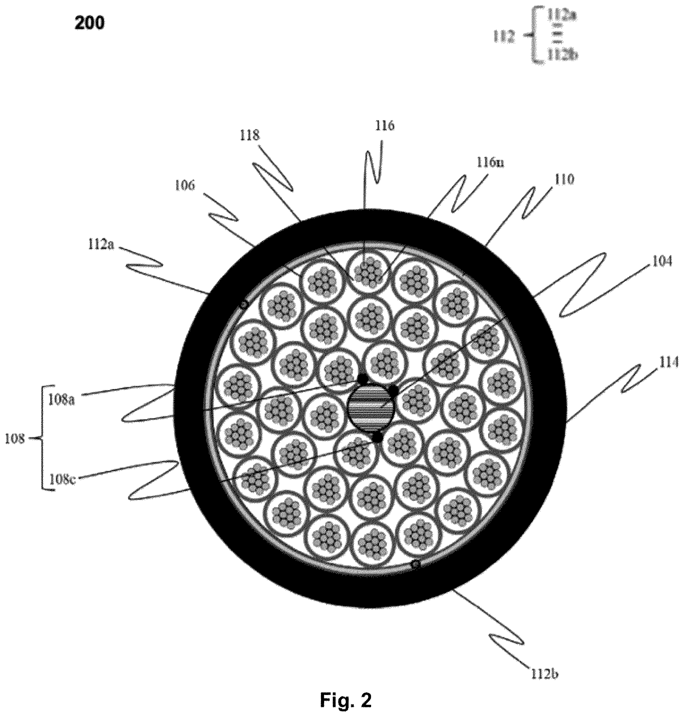

Fig. 1 and Fig. 2 are pictorial snapshots illustrating the cross-sectional view of optical fiber cable (100, 200) respectively in accordance with one or more embodiments of the present disclosure.

The optical fiber cable 100 may be adapted to be laid inside various ducts that may be used in different applications. In particular, the optical fiber cable 100 may have a central strength member (CSM) 104, a plurality of buffer tubes 106 of which first through twenty-two buffer tubes 106a-106v are shown, a plurality of Water Swellable Yarns (WSY) 108 of which first through third WSYs 108a-108c are shown, a binder yarn 110, a plurality of ripcords 112 of which first and second ripcords 112a-112b are shown, and a sheath 114. The optical fiber cable 100 has twenty-two buffer tubes (*i.e*., the twenty-two buffer tubes 106a-106v), three WSYs (*i.e.,* the first through third WSYs 108a-108c), and two ripcords (*i.e.,* the first and second ripcords 112a-112b), but it will be apparent to a person skilled in the art that the scope of the present disclosure is not limited to it. In various other aspects, the optical fiber cable 100 may have any number of buffer tubes, WSYs, and ripcords, without deviating from the scope of the present disclosure. In such a scenario, each buffer tube, each WSY, and each ripcord is adapted to serve one or more functionalities in a manner similar to the first through twenty-two buffer tubes 106a-106v, the first through third WSYs 108a-108c, and the first and second ripcords 112a-112b, respectively, as described herein.

In accordance with an embodiment of the present disclosure, the plurality of buffer tubes 106 may be stranded around the CSM 104. Moreover, each buffer tube of the plurality of buffer tubes 106 may be adapted to enclose one or more optical fibers 116 (hereinafter interchangeably referred to and designated as "the optical fibers 116") and a gel 118. Further, the first buffer tube 106a may be adapted to enclose the one or more optical fibers 116. Similarly, each buffer tube of the plurality of buffer tubes 106 may be adapted to enclose the one or more optical fibers 116. It will be apparent to a person skilled in the art that the one or more optical fibers 116 signifies that any number of optical fibers can be enclosed within each buffer tube of the plurality of buffer tubes 106, without deviating from the scope of the present disclosure.

In accordance with an embodiment of the present disclosure, the one or more optical fibers 116 may be disposed within the gel 118 inside each buffer tube of the plurality of buffer tubes 106. In alternative aspects of the present disclosure, each buffer tube of the plurality of buffer tubes 106 may be a dry-type buffer tube that may enclose the one or more optical fibers 116 without any gel. Yet in another Alternative aspect of the present disclosure, each buffer tube of the plurality of buffer tubes 106 may enclose the one or more optical fibers 116 with a WSYs of the plurality of WSYs 108.

In accordance with an embodiment of the present disclosure, the optical fiber cable 100 may have a higher fill factor greater than 7 fibers/millimeter square (f/mm²). For example, the optical fiber cable 100 may have the fill factor that may be 7 f/mm², 8 f/mm², 9 f/mm², 10 f/mm², and so on. In particular, the fill factor greater than 7 f/mm² may advantageously facilitate the optical fiber cable 100 to accommodate a greater number of optical fibers (such as the one or more optical fibers 116) while keeping an outer diameter of the optical fiber cable 100 substantially low. Further, the fill factor being greater than 7 f/mm², the optical fiber cable 100 with the outer diameter of less than or equal to 7 millimeter (mm) may accommodate 288 optical fibers (such as the optical fibers 116).

In accordance with an embodiment of the present disclosure, the optical fiber cable 100 may have a lower weight per unit length. Therefore, the optical fiber cable 100 may be lighter in weight that allows better blowing performance for installation. Further, the optical fiber cable 100 may be easier to handle, owing to the light weight of the optical fiber cable 100.

In accordance with an embodiment of the present disclosure, the weight per unit length of the optical fiber cable 100 may be 65 Kilograms/Kilometers (Kg/Km) with a tolerance value of ± 10 Kg/Km with 288 optical fibers ( 116). In alternative embodiments, the cable weight per unit length per unit fiber count of the optical fiber cable 100 may have a lower range. Specifically, the cable weight per unit length per unit fiber count of the optical fiber cable 100 may be in a range of 0.19 Kg/Km/fiber to 0.26 Kg/Km/fiber. The lower range of the cable weight per unit length per unit fiber count may signify enhanced signal capacity of the optical fiber cable 100 with minimal weight of other components of the optical fiber cable 100.

In accordance with an embodiment of the present disclosure, the optical fiber 116 of the cable 100 may have a zero-dispersion slope that may be less than or equal to 0.092 temporal spread (ps) per unit propagation distance (in kilometers, Km), per square unit pulse spectral width (in nanometers square, nm²) (ps/nm²-Km). In particular, the lower zero-dispersion slope of the optical fibers enables the optical fiber cable 100 to maintain signal integrity over long distance and spectral width.

In accordance with an embodiment of the present disclosure, the optical fiber cable 100 may have an outer diameter that may be less than 40 times of an outer diameter of each optical fiber of the optical fibers 116. Alternatively, the outer diameter of the optical fiber cable 100 greater than 40 times of the outer diameter of each optical fiber of the optical fibers 116 may increase weight of the optical fiber cable 100. Further, the outer diameter of the optical fiber cable 100 greater than 40 times of the outer diameter of each optical fiber of the optical fibers 116 may reduce the fill factor.

In accordance with an embodiment of the present disclosure, each optical fiber of the optical fibers 116 may have a lower diameter that advantageously help to increase the fill factor of the optical fiber cable 100. In particular, each optical fiber of the optical fibers 116 may have a diameter that may be in a range between 150 micrometers (µm) and 190 µm. Moreover, each optical fiber of the optical fibers 116 may have a diameter that may be one of 160 µm and 180 µm. Further, each optical fiber of the optical fibers 116 may have a diameter that may be less than 190 µm. The use of small diameter optical fibers 116 potentially enables higher packing density, reduced weight and flexibility inside the cable 100.

In accordance with an embodiment of the present disclosure, each optical fiber of the one or more optical fibers 116 may have a glass diameter of utmost 126 µm. In particular, each optical fiber of the one or more optical fibers 116 may have a glass diameter between 60-126 µm. Moreover, the glass diameter of each optical fiber of the one or more optical fibers 116 has a core of the optical fiber and a cladding of the optical fiber. Further, each optical fiber of the optical fibers 116 may have a mode field diameter that may be 8.6 µm with a tolerance value of ± 0.4 µm at a wavelength of 1310 nanometers.

In accordance with an embodiment of the present disclosure, each optical fiber of the optical fibers 116 may have lower macro bending loss. For example, each optical fiber 300 of the optical fibers 116 may have a macro bending loss that may be less than 0.03 Decibel (dB) at a wavelength of 1550 nanometers (nm) when deployed with 10 turns at a mandrel of 15 mm radius. In another example each optical fiber 300 of the optical fibers 116 may have a macro bending loss that may be less than or equal to 0.5 dB per turn at a wavelength of 1625 nm and the bend radius of 7.5 mm.

The optical fibers 116 with greater macro bending loss may have high attenuations during bending or handling of the optical fibers 116. In particular, the optical fibers 116 with lower macro bending loss may facilitate in manufacturing of the optical fiber cable 100 with a reduced diameter and enable it to maintain signal quality under bending conditions. Further, the lower macro bending loss may facilitate the manufacture of the optical fiber cable 100 that may have a weight per unit length value of 65 Kg/Km with a tolerance value of ± 10Kg/Km with 288 optical fibers (such as the optical fibers 116). I

In accordance with an embodiment of the present disclosure, each optical fiber of the optical fibers 116 may have an attenuation of less than or equal to 0.35 dB/km at 1310 nm wavelength and an attenuation of less than or equal to 0.21 dB/km at 1550 nm wavelength.

In accordance with an embodiment of the present disclosure, the CSM 104 may be disposed at a center of the optical fiber cable 100. In particular, the CSM 104 may be adapted to provide physical strength to the optical fiber cable 100. Moreover, the CSM 104 may be adapted to provide rigidity to prevent the optical fiber cable 100 from buckling. Further, the CSM 104 may be made up of a material, including but not limited to, steel, fiberglass, fiber-reinforced plastic (FRP), aramid-reinforced plastic (ARP), and the like. Aspects of the present disclosure are intended to include and/or otherwise cover any type of material for the CSM 104, without deviating from the scope of the present disclosure.

In accordance with an embodiment of the present disclosure, the CSM 104 may be coated with a material, including but not limited to, polyethylene. Aspects of the present disclosure are intended to include and/or otherwise cover any type of material for the coating that may be coated on the CSM 104, without deviating from the scope of the present disclosure.

In accordance with an embodiment of the present disclosure, the buffer tubes 106 may be stranded around the CSM 104. In particular, the buffer tubes 106 may be stranded in at-least two concentric layers around the CSM 104. Moreover, the buffer tubes 106 may be stranded in at-least two concentric layers around the CSM 104 *i.e.,* dual layers of the buffer tubes 106.

Further, the optical fiber cable 100 may have a dual layer design *i.e.,* the buffer tubes 106 are stranded in dual layers. The at-least two concentric layers of buffer tubes 106 may advantageously reduce an overall diameter of the optical fiber 300. The plurality of buffer tubes 106 in each of the concentric layers are SZ stranded at a lay-length of at least 80 mm face high macrobending losses in the optical fibers 116 present inside the plurality of buffer tubes.

In an aspect, the first layer of plurality of buffer tubes 106 is SZ stranded at a lay-length of 85 mm, second layer of plurality of buffer tubes 106 is SZ stranded at a lay-length of 100 mm.

In another aspect, the first layer of plurality of buffer tubes 106 is SZ stranded at a lay-length of 85 mm, second layer of plurality of buffer tubes 106 is SZ stranded at a lay-length of 100 mm and a third layer of plurality of buffer tubes 106 is SZ stranded at a lay-length of 120 mm. The plurality of buffer tubes 106 in adjacent concentric layers have a lay-length difference of at least 15 mm that enables to maintain desired extra fiber length in each of the concentric layers, thereby helping minimum stress generation on optical fibers 116 of the cable 100 during handling and temperature variations conditions. Further, the plurality of buffer tubes 106 in each of the concentric layers are bound by two or more binders wound at a lay-length of 25±10 mm. The binding lay-length of binders is optimized to maintain the stranded integrity of the plurality of buffer tubes 106 while not generating any physical stresses on the buffer tubes 106 in each of the concentric layers.

In accordance with an embodiment of the present disclosure, each buffer tube of the plurality of buffer tubes 106 may have a thickness that may be less than 120 µm. In particular, each buffer tube of the plurality of buffer tubes 106 may have a thickness that may be 100 µm with a tolerance value of ± 10 µm. In alternative embodiment, each buffer tube of the plurality of buffer tubes 106 may have the thickness that may be 80 µm with a tolerance value of ± 10 µm. The thickness of each buffer tube of the plurality of buffer tubes 106 may be kept less than 120 µm to reduce the diameter and weight of the optical fiber cable 100, which may make the optical fiber cable 100 more compact and easier to install. The optical fiber cable 100 being compact in size may be easily deployed in underground and aerial installations.

Further, the thickness of each buffer tube of the plurality of buffer tubes 106 may be kept less than 120 µm to improve fill factor of the optical fiber cable 100. The thickness of each buffer tube of the plurality of buffer tubes 106 may be kept less than 120 µm to provide a hardness grade that may be greater than 70 in a hardness scale SHORE D. The hardness grade greater than 70 in the hardness scale SHORE D may prevent deformation of the optical fiber cable 100. Furthermore, the hardness grade greater than 70 in the hardness scale SHORE D may provide requisite mechanical strength that may facilitate the optical fiber cable 100 to withstand mechanical stresses and bending. And, the SHORE D hardness of the optical fiber cable 100 being greater than 70 may prevent damage to the optical fiber cable while bending.

In accordance with an embodiment of the present disclosure, each buffer tube of the plurality of buffer tubes 106 may be made up of a material, such as but not limited to, polybutylene terephthalate (PBT). Aspects of the present disclosure are intended to include and/or otherwise cover any type of material for each buffer tube of the buffer tubes 106, without deviating from the scope of the present disclosure.

In accordance with an embodiment of the present disclosure, the material of each buffer tube of the plurality of buffer tubes 106 may have a lower viscosity. In particular, the material of each buffer tube of the plurality of buffer tubes 106 may have a viscosity that may be less than 150 cubic centimeter per gram (cm³/g) at 23°C. Moreover, the material of each buffer tube of the plurality of buffer tubes 106 may have the viscosity that may be 145 cm³/g at 23°C. The viscosity of the material of each buffer tube of the buffer tubes 106 being less than 150 cm³/g may advantageously ease processing of the material. The viscosity of the material of each buffer tube of the buffer tubes 106 being less than 150 cm³/g may advantageously allow it to achieve a low thickness of 100 µm. The lower viscosity of the material of each buffer tube of the buffer tube 106 may advantageously allow manufacturing of the optical fiber cable 100 with a reduced diameter and helps to keep high fill factor for the optical fiber cable 100.

In accordance with an embodiment of the present disclosure, the optical fibers 116 may be arranged as one of, (i) loose fibers, (ii) ribbon fibers, and (iii) intermittently bonded ribbons. Aspects of the present disclosure are intended to include and/or otherwise cover any type of arrangement of the optical fibers 116, without deviating from the scope of the present disclosure.

In accordance with an embodiment of the present disclosure, the plurality of swellable yarns 108 may be disposed around the CSM 104. In particular, the plurality of swellable yarns 108 may be disposed on a periphery of the CSM 104. Each swellable yarn of the plurality of swellable yarns 108 may be a super absorbent polymer impregnated high tenacity polyester fiber base swellable yarn. Moreover, the plurality of swellable yarns 108 may be adapted to block water. Further, the swellable yarns 108 may provide water resistance to the optical fibers 116 over a longer period of time and facilitate complete insulation and protect the optical fiber cable 100 against water ingression.

In accordance with an embodiment of the present disclosure, the binder yarn 110 may enclose the CSM 104, the buffer tubes 106, and the swellable yarns 108. In particular, the binder yarn 110 may be adapted to bind the buffer tubes 106 around CSM 104. Moreover, the binder yarn 110 advantageously ensures that the CSM 104, the buffer tubes 106, and the swellable yarns 108 may remain intact at their respective locations or positions within the optical fiber cable 100.

In accordance with an embodiment of the present disclosure, the plurality of ripcords 112 may be disposed of on the binder yarn 110. In particular, the plurality of ripcords 112 may be disposed on the outer periphery of the binder yarn 110 and beneath the sheath 114. Moreover, the plurality of ripcords 112 may be utilized to tear apart sheath 114 to access the buffer tubes 106 and the optical fibers 116 inside the optical fiber cable 100.

In accordance with an embodiment of the present disclosure, each ripcord of the plurality of ripcords 112 may be made up of a material such as, but not limited to, aramid yarn, fiberglass epoxy, and steel. Aspects of the present disclosure are intended to include and/or otherwise cover any type of material for each ripcord of the ripcords 112, without deviating from the scope of the present disclosure.

In accordance with an embodiment of the present disclosure, the sheath 114 may enclose the binder yarn 110. In particular, the sheath 114 may be arranged and/or disposed on a periphery of the binder yarn 110. Moreover, the sheath 114 may be made up of a material such as, but not limited to, polyethylene, thermoplastic polyurethane, low smoke zero halogen (LSZH), and the like. Aspects of the present disclosure are intended to include and/or otherwise cover any type of material for the sheath 114, without deviating from the scope of the present disclosure.

The optical fiber cable 200 of Fig. 2 may be substantially similar to the optical fiber cable 100, with like elements referenced with like reference numerals. The optical fiber cable 200 shows three concentric layers of the plurality of buffer tubes 106. In particular, the plurality of buffer tubes 106 may be stranded around the CSM 104 of the optical fiber cable 200 in three concentric layers. Moreover, various constructional features of the optical fiber cable 200 may be similar to the various constructional features of the optical fiber cable 100 as described hereinabove, apart from the difference in the number of concentric layers in which the plurality of buffer tubes 106 are stranded.

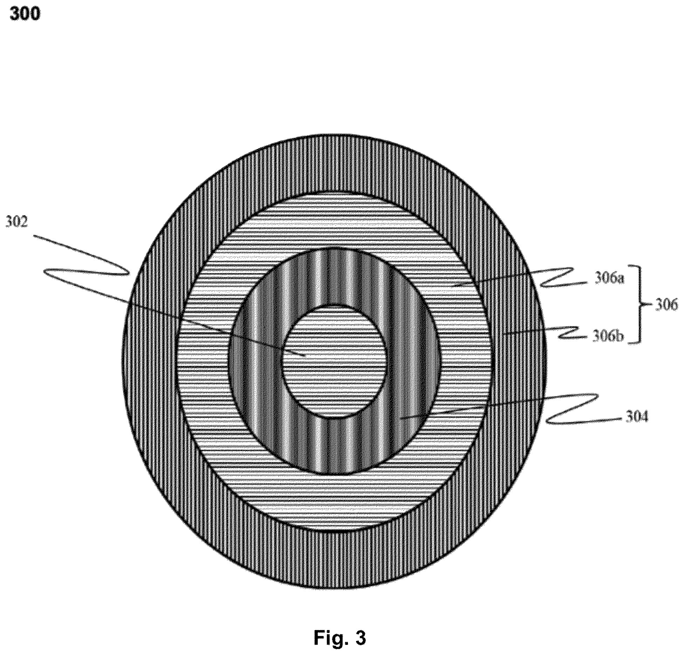

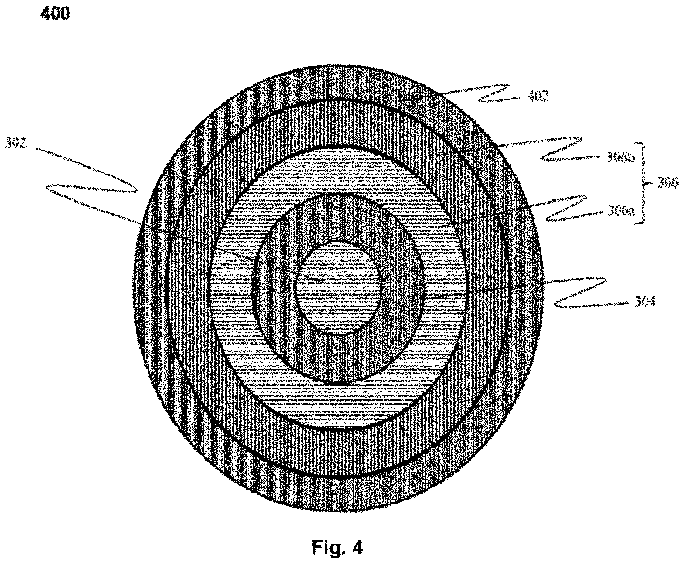

Fig. 3 and Fig. 4 are pictorial snapshots illustrating the cross-sectional view of optical fiber in accordance with one or more embodiments of the present disclosure. The optical fiber 300 is one of the one or more optical fibers 116 of the optical fiber cable 100 and have a core 302, a clad layer 304, one or more protective coating layer 306 of which a primary coating layer 306a and a secondary coating layer 306b is shown.

The core 302 may form a central region or portion of the optical fiber 300 and the clad layer 304 may be deposited on the core 302. In particular, the clad layer 304 along with core 302 may be referred to as a glass layer. The one or more protective coating layers 306 may be deposited on the clad layer 304. Moreover, the primary coating layer 306a may be deposited on the clad layer 304 and the secondary coating layer 306b may be deposited on the primary coating layer 306a.

In some aspects of the present disclosure, the core 302 may be made up of a material such as, but not limited to, glass. Aspects of the present disclosure are intended to include and/or otherwise cover any type of material for the core 302, without deviating from the scope of the present disclosure.

In accordance with an embodiment of the present disclosure, each optical fiber of the one or more optical fibers 116 may have a glass diameter of utmost126 µm. In particular, the glass diameter may correspond to a diameter of the glass layer that has the clad layer 304 along with core 302. Moreover, the thickness of each buffer tube of the buffer tubes 106 may be less than the diameter of the glass layer. Further, the thickness of each buffer tube of the buffer tubes 106 may be 100 µm, which is less than the diameter of the glass layer *i.e.,* 125 µm. The thickness of each buffer tube of the buffer tubes 106 being less than the diameter of the glass layer may facilitate easy removal of the optical fibers 116 from each buffer tube of the buffer tubes 106 and advantageously allow easy maintenance and repair of the optical fiber cable 100. In other words, easy removal of the optical fibers 116 may allow a technician to access the optical fibers 116 without damaging them.

In accordance with an embodiment of the present disclosure, the one or more protective layers 306 may have a lower combined thickness. For example, the one or more protective layers 306 may have a combined thickness that may be less than 30 µm. The combined thickness of the one or more protective layer 306 being less than 30 µm may advantageously reduce an overall diameter of the optical fiber 300. Further, the combined thickness of the one or more protective layers 306 being less than 30 µm may advantageously provide a high fill factor for the optical fiber cable 100.

In accordance with an embodiment of the present disclosure, the one or more protective coating layers 306 may have a combined thickness of less than 30 micrometers (µm). In particular, the primary coating layer 306a may have a thickness in a range of 2.5 µm to 10 µm. Moroever, the thickness of the primary coating layer 306a of less than 2.5 µm may not protect the optical fiber 300 and the thickness of the primary coating layer 306a greater than 10 µm may increase the overall diameter and bulkiness of the optical fiber 300.

In accordance with an embodiment of the present disclosure, the primary coating layer 306a may have a young's modulus that may be in a range between 0.1 megapascal (MPa) and 0.4 MPa. In particular, the primary coating layer 306a may have a diameter that may be in a range between 130 µm and 145 µm that may ensure adequate protection of the optical fibers 116 from external factors. Moreover, the diameter of the primary coating layer 306a being in the range between 130 µm and 145 µm may strike a balance between protection and efficiency of the optical fiber cable 100 and thereby allowing high quality signal transmission without compromising performance of the optical fiber 300. Further, the young's modulus of the primary coating layer 306a being in the range between 0.1 MPa and 0.4 MPa may provide sufficient rigidity to the primary coating layer 306a and may simultaneously provide flexibility to the primary coating layer 306a.

In accordance with an embodiment of the present disclosure, the young's modulus in the range between 0.1 MPa and 0.4 MPa may allow the primary coating layer 306a to serve as a cushion between the glass layer and the secondary coating layer 306b to maintain the shape of the optical fiber 300.

In accordance with an embodiment of the present disclosure, the young's modulus in the range between 0.1 MPa and 0.4 MPa and the diameter of the primary coating layer 306a in the range 130 µm and 145 µm may advantageously facilitate the optical fiber cable 100 to have an optimal balance between protection, flexibility, and strength. This may ensure adequate protection of the optical fiber cable 100 from external factors and simultaneously maintain flexibility that may facilitate the optical fiber cable 100 to withstand bending and mechanical stresses without causing any damage to the optical fiber cable 100, especially when the outer diameter of the optical fiber cable 100 is less than 190 µm.

In accordance with an embodiment of the present disclosure, the young's modulus in the range between 0.1 MPa and 0.4 MPa and the diameter of the primary coating layer 306a in the range 130 µm and 145 µm may further advantageously facilitate high quality signal transmission and reliable performance of the optical fiber 300 in a variety of applications.

In accordance with an embodiment of the present disclosure, the secondary coating layer 306b may have a thickness that may be in a range between 2.5 µm and 17.5 µm. In particular, the thickness of the secondary coating layer 306b less than 2.5 µm may not protect the optical fiber 300. Further, the thickness of the secondary coating layer 306b greater than 17.5 µm may increase the overall diameter of the optical fiber 300.

In accordance with an embodiment of the present disclosure, the secondary coating layer 306b may have a modulus that may be greater than 1.2 Gigapascal (GPa). In other words, the secondary coating layer (306b) has an in-situ modulus of greater than 1.2 Giga Pascal (GPa). The secondary coating layer 306b having the modulus less than 1.2 GPa may not be strong and therefore may not protect the optical fiber 300 during handling.

In accordance with an embodiment of the present disclosure, the secondary coating 306b may be a colored coating layer which helps in further reducing the overall diameter of the optical fiber 300.

In accordance with an embodiment of the present disclosure, the combination of
(i) the combined thickness of the one or more protective layers 306 may be less than 30 µm,
(ii) the modulus of the secondary coating layer 306b may be greater than 1.2 GPa, and
(iii) the macro bending loss of each optical fiber of the optical fibers 116 may be less than 0.03 dB at the wavelength of 1550 nm, may increase the fill factor of the optical fiber cable 100.

In accordance with an embodiment of the present disclosure, the modulus of secondary coating ensures optimized level of stiffness over the optical fiber 300 to protect it from abrasion contributing to the cable's mechanical integrity, especially when manufactured with small diameter optical fibers 300. Further, the combination of the primary coating and secondary coating layers 306 within the specified thickness ranges provides unique protection for the optical fibers, which can be crucial in ensuring their performance and durability inside the optical fiber cable 100.

In accordance with an embodiment of the present disclosure, the combination of properties of the optical fibers 116 *(e.g.,* the optical fiber 300), and optimized thickness of each buffer tube of the buffer tubes 106 may increase the fill factor of the optical fiber cable 100.

The optical fiber 400 of Fig. 4 is one of the one or more optical fibers 116 of the optical fiber cable 100. In particular, the optical fiber 400 may be substantially similar to the optical fiber 300, with like elements referenced with reference numerals. But, the optical fiber 400 has an additional layer 402. Further, various constructional features of the optical fiber 400 may be similar to the various constructional features of the optical fiber cable 300 as described hereinabove, apart from the difference in incorporation of the additional layer 402 in the optical fiber 400. In particular, the additional layer 402 may be coated around the one or more protective layers 306. Moreover, the additional layer 402 may be coated around the secondary coating layer 306b. Further, the additional layer 402 may be a color layer.
In accordance with an embodiment of the present disclosure, the outer diameter of the optical fiber cable 100 may be less than 40 times of an outer diameter of the additional layer 402. In alternative embodiment, the outer diameter of the optical fiber cable 100 may be around 37 times of the outer diameter of the additional layer 402 allowing an increase in packing density of the optical fibers 116 that may be desired in applications having compact constructions or spaces.

In accordance with an embodiment of the present invention, an optical fiber cable 100 comprising a central strength member (CSM) 104, a plurality of buffer tubes 106 stranded around the CSM 104, one or more optical fibers 116. The one or more optical fibers 116 are enclosed in such that each buffer tube of the plurality of buffer tubes 106. The one or more optical fibers 116 has a core 302, a cladding 304, one or more protective coating layers 306 over the cladding 304.. The core 302 and the cladding 304) defines a glass diameter of utmost 126 µm. The one or more protective coating has a combined thickness of less than 27.5 micrometers (µm); and a sheath 114 that is the outermost layer of the optical fiber cable 100.

In accordance with an embodiment of the present invention, the plurality of buffer tubes 106 are stranded in at-least two concentric layers around the CSM 104.

In accordance with an embodiment of the present invention, the plurality of buffer tubes 106 in two adjacent concentric layers are stranded at a lay-length difference of at least 15 mm.

In accordance with an embodiment of the present invention, the optical fiber cable 100 has a fill factor of greater than 7 fibers/millimeter square (f/mm²).

In accordance with an embodiment of the present invention, a diameter of each optical fiber 116 of the one or more optical fiber is less than 190 µm.

In accordance with an embodiment of the present invention, each buffer tube of the plurality of buffer tubes 106 has a thickness of less than 120 µm.

In accordance with an embodiment of the present invention, each buffer tube of the plurality of buffer tubes 106 is made up of a material having a viscosity of less than 150 cubic centimeter per gram (cm³/g) at 23°C.

In accordance with an embodiment of the present invention, each optical fiber of the one or more optical fibers 116 has at least one of: a macro-bending loss of less than 0.03 Decibel (dB) at 1550 nanometers (nm) when deployed with 10 turns around a mandrel of 15 mm radius,a zero-dispersion slope of the optical fiber cable (100) is less than or equal to 0.092 temporal spread per unit propagation distance per square unit pulse spectral width nanometers square (ps/nm²-Km) and a mode field diameter (MFD) of 8.6±0.4 µm at a wavelength of 1310 nm.

In accordance with an embodiment of the present invention, plurality of buffer tubes 106 in each of the concentric layers are stranded at a lay-length of at least 80 mm.

The configuration of buffer tubes with high density packaging, reducing the overall cable size while enhancing flexibility and minimizing macro-bending losses. Additionally, the invention achieves a higher fill factor, improving data transmission capacity within a smaller footprint. Further, provides improved flexibility, reduced macro-bending losses, and enhanced optical performance. The specified coating layers, improved fiber characteristic and lay-length configurations contribute to the overall durability and reliability of the optical fiber cable.

The critical features identified in claim 1 are integral to addressing the industry problem of accommodating increasing data transmission demands in limited space. The arrangement of buffer tubes stranded around the central strength member (CSM) optimizes space utilization while maintaining structural integrity. Additionally, the specified thickness of protective coating layers on each optical fiber ensures a combined thickness below 30 micrometers, contributing to the overall reduction in cable size.

In accordance with an embodiment of the present invention, the arrangement of buffer tubes around the CSM, as stipulated in claim 1, serves a dual purpose. It provides mechanical strength through the central strength member while allowing for a densely packed, yet flexible, design due to the stranded buffer tubes. This configuration directly contributes to the reduction in the overall cable size, addressing the long-felt need for a compact optical fiber cable. This combined with optical fibers with enhanced performance, lead to a high density packaged cable.

In accordance with an embodiment of the present invention, the deployment of optical fiber cables in confined spaces without sacrificing performance. Examples has installations in densely populated urban areas, where efficient space utilization is critical, and in high-capacity data centers requiring compact yet high-performance cable solutions.

In accordance with an embodiment of the present invention, the optical fiber covers various multitube cable configurations with reduced size and enhanced performance. The disclosed features, such as buffer tube arrangement and protective coating specifications, can be applied to a range of optical fiber cable designs, providing a versatile solution to industry challenges.

Advantageously, the optical fiber cable 100 may have a reduced diameter, reduced weight, and better blowing performance. By virtue of the high fill factor of the optical fiber 100, the optical fiber cable 100 may enclose a greater number of optical fibers of the optical fibers 116. Further, the dual layer design of the optical fiber cable 100 may enable overall reduction in size of the optical fiber cable 100. Furthermore, by virtue of the low thickness of the protective layer 306, a greater number of optical fibers may be packed or embedded in less space in each buffer tube of the buffer tube 106.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims

## Claims

1. An optical fiber cable (100) **characterized in that**:
a central strength member (CSM) (104);
a plurality of buffer tubes (106) stranded around the CSM (104) such that each buffer tube of the plurality of buffer tubes (106) encloses one or more optical fibers (116) such that each optical fiber of the one or more optical fibers (116) has one or more protective coating layers (306) that has a combined thickness of less than 30 micrometers (µm), wherein each optical fiber of the one or more optical fibers (116) has a glass diameter of utmost 126 µm, wherein the glass diameter includes a core (302) and a cladding (304), wherein the plurality of buffer tubes (106) are stranded in at-least two concentric layers around the CSM (104) and the optical fiber cable (100) has a fill factor of greater than 7 fibers/millimeter square (f/mm²); and
a sheath (114) that surrounds the CSM (104) and the plurality of buffer tubes (106).

2. The optical fiber cable (100) of claim 1, wherein the one or more protective coating layers (306) comprising a primary coating layer (306a) with a thickness in a range of 2.5 µm to 10 µm and a secondary coating layer (306b) with a thickness in a range of 2.5 µm to 17.5 µm.

3. The optical fiber cable (100) of claim 1, wherein a diameter of each optical fiber (116) of the one or more optical fiber is less than 190 µm.

4. The optical fiber cable (100) of claim 1, wherein each buffer tube of the plurality of buffer tubes (106) is made up of a material having a viscosity of less than 150 cubic centimeter per gram (cm³/g) at 23°C.

5. The optical fiber cable (100) of claim 1, wherein each buffer tube of the plurality of buffer tubes (106) has a thickness of less than 120 µm.

6. The optical fiber cable (100) of claim 1, wherein each optical fiber of the one or more optical fibers (116) has at least one of:
a macro-bending loss of less than 0.03 Decibel (dB) at 1550 nanometers (nm) when deployed with 10 turns around a mandrel of 15 mm radius;
a zero-dispersion slope of the optical fiber cable (100) is less than or equal to 0.092 temporal spread per unit propagation distance per square unit pulse spectral width nanometers square (ps/nm²-Km); and
a mode field diameter (MFD) of 8.6±0.4 µm at a wavelength of 1310 nm.

7. The optical fiber cable (100) of claim 1, wherein the plurality of buffer tubes (106) in each of the concentric layers are stranded at a lay-length of at least 80 mm.

8. The optical fiber cable (100) of claim 1, wherein the plurality of buffer tubes (106) in two adjacent concentric layers are stranded at a lay-length difference of at least 15 mm.

9. The optical fiber cable (100) of claim 1, wherein the plurality of buffer tubes (106) in each of the concentric layers are bound by two or more binders wound at a lay-length of 25±10 mm.

10. An optical fiber cable (100) **characterized in that**:
a central strength member (CSM) (104);
a plurality of buffer tubes (106) stranded around the CSM (104);
one or more optical fibers (116), wherein the one or more optical fibers (116) are enclosed in such that each buffer tube of the plurality of buffer tubes (106), wherein the one or more optical fibers (116):
a core (302);
a cladding (304), wherein the core (302) and the cladding (304) defines a glass diameter of utmost 126 µm; and
one or more protective coating layers (306) over the cladding (304), wherein the one or more protective coating has a combined thickness of less than 27.5 micrometers (µm); and
a sheath (114) that is the outermost layer of the optical fiber cable (100).

11. The optical fiber cable (100) of claim 10, wherein the plurality of buffer tubes (106) are stranded in at-least two concentric layers around the CSM (104).

12. The optical fiber cable (100) of claim 10, wherein the plurality of buffer tubes (106) in two adjacent concentric layers are stranded at a lay-length difference of at least 15 mm.

13. The optical fiber cable (100) of claim 10, wherein the optical fiber cable (100) has a fill factor of greater than 7 fibers/millimeter square (f/mm²).

14. The optical fiber cable (100) of claim 1, wherein a diameter of each optical fiber (116) of the one or more optical fiber is less than 190 µm.

15. The optical fiber cable (100) of claim 1, wherein each buffer tube of the plurality of buffer tubes (106) has a thickness of less than 120 µm.
